# EUROPÄISCHE PATENTSCHRIFT

(11) **EP 1 228 948 B1**
(45) Veröffentlichungstag und Bekanntmachung des Hinweises auf die Patenterteilung: **01.06.2005**
(21) Anmeldenummer: 02001531.9
(22) Anmeldetag: 23.01.2002
(51) Int. Cl.: B62D 25/14, B62D 27/02

(54) **Querträger für eine Armaturentafel eines Fahrzeugs**
Transverse support beam for the dashboard of a vehicle
Traverse de support pour tableau de bord de véhicule

(30) Priorität: 02.02.2001 DE 10104790
(43) Veröffentlichungstag der Anmeldung: 07.08.2002
(73) Patentinhaber: Dr.Ing. h.c.F. Porsche Aktiengesellschaft, 70435 Stuttgart (DE)
(72) Erfinder: Scheidel, Robert, 75031 Eppingen (DE)

(56) Entgegenhaltungen:
- DE-A- 19 618 626
- DE-A- 19 830 303
- DE-C- 19 547 858
- US-A- 5 931 520

## Beschreibung

Die Erfindung bezieht sich auf einen Querträger für eine Armaturentafel eines Fahrzeugs, gemäß Oberbegriff des Anspruchs 1. Ein derartiger Querträger ist zum Beispiel aus der DE 19 547 858 C1 bekannt.

Aus der DE 196 18 626 A1 ist ein auch als Cockpitquerträger bezeichneter Querträger für eine Armaturentafel bekannt. Dieser weist einen Grundträger auf, der durch ein Hohlprofil mit kreisförmigem Querschnitt gebildet wird. An jedem Ende des rohrförmigen Grundträgers sind zwei Befestigungskonsolen angeordnet, die der Anbindung des Cockpitquerträgers an sich gegenüberliegenden Aufbauteilen des Fahrzeugaufbaus dienen. Ferner ist an dem Grundträger zumindest ein Halter für ein Anbauteil des auch als Armaturentafel bezeichneten Cockpits angebracht. Fig. 5 dieser Druckschrift zeigt, dass an dem Grundträger eine ebene Ausrichtfläche durch Innenhochdruckumformung ausgebildet ist, an der eine ebene Anlagefläche anliegt, die an dem Halter ausgebildet ist. Für die Befestigung des Halters an dem Grundträger wird dieser bei der Innenhochdruckumformung so verformt, dass er ein am Halter angebrachtes Befestigungselement hintergreift. Für die Herstellung des bekannten Cockpitquerträgers werden sowohl der Grundträger als auch die daran zu befestigenden Halter in Ausnehmungen einer Form eingesetzt, in der Gravuren ausgebildet sind, in die das Grundträgermaterial bei der Innenhochdruckumformung fließen kann. Nachteilig bei dem bekannten Cockpitquerträger ist, dass er insgesamt aufwendig herzustellen ist.

Es ist daher Aufgabe der Erfindung, einen Querträger der eingangs genannten Art zu schaffen, bei dem Anbauteile der Armaturentafel positionsgenau angebracht werden können und dennoch eine einfache Herstellung des Querträgers gegeben ist.

Gelöst wird diese Aufgabe mit einem Querträger für eine Armaturentafel eines Fahrzeugs, insbesondere Personenkraftwagen, der die in Anspruch 1 genannten Merkmale aufweist.

Weitere vorteilhafte Ausgestaltungen des Querträgers sind in den Unteransprüchen angegeben.

Die mit dem erfindungsgemäßen im folgenden als Cockpitquerträger bezeichneten Querträger hauptsächlich erzielten Vorteile sind darin zu sehen, dass der Halter ohne ein diesen aufnehmendes Formwerkzeug an dem Grundträger befestigt werden kann. Durch die beiden Ausrichtflächen kann der Halter positionsgenau an den Grundträger angelegt und anschließend mit ihm verschweißt werden. Durch das Verschweißen des Halters mit dem Grundträger ist außerdem eine sichere und dauerhafte Befestigung gewährleistet Durch die positionsgenaue Ausrichtung des Halters können auch Anbauteile des Cockpits bzw. der Armaturentafel exakt ausgerichtet angebracht werden, wodurch an der fertig hergestellten Armaturentafel zwischen zwei Anbauteilen im Wesentlichen gleiche Spaltmaße vorliegen, so dass sich insgesamt ein vorteilhaftes bzw. ansprechendes Erscheinungsbild des Cockpits ergibt.

In Anspruch 2 ist eine Befestigungsmöglichkeit für ein weiteres Anbauteil des Cockpits oder einen weiteren Halter angegeben. Da die Schnapp- oder Nietmutter auf der ebenen Ausrichtfläche zu liegen kommt, ist diese Mutter am Grundträger positionsgenau ausgerichtet, so dass daran das Anbauteil oder der Halter exakt ausgerichtet befestigt werden kann.

Nach einer Weiterbildung der Erfindung mit den in Anspruch 3 genannten Merkmalen ist es vorteilhaft, dass für die Schweißnaht ein im Wesentlichen gleichbleibender geringer Spalt zwischen Halter und Grundträger vorliegt.

Bei einem bevorzugten Ausführungsbeispiel des Cockpitquerträgers gemäß Anspruch 4 ist in vorteilhafter Weise erreicht, dass das Cockpit mit dem Grundträger und einem Halter mit einem daran schwenkbar angelenkten Pedal für eine Feststellbremse komplett in das Fahrzeug eingesetzt und darin befestigt werden kann und anschließend für die Fußfeststellbremse lediglich die Kraftübertragungsmittel, beispielsweise Bowdenzüge, an dem Pedal eingehängt werden müssen.

Gemäß einer Weiterbildung der Erfindung mit den Merkmalen des Anspruchs 14 kann sich eine Instrumententafel an zumindest einer ebenen Positionierfläche abstützen bzw. wird daran ausgerichtet, wodurch eine positionsgenaue Anbindung der Instrumententafel am Cockpitquerträger möglich ist. Alternativ oder zusätzlich kann an dem Grundträger - gemäß Anspruch 15 - ein Positionierdurchbruch ausgebildet sein, der der Aufnahme eines an der Instrumententafel liegenden Positionierstiftes dient. Die Instrumententafel kann mithin in Fahrzeugquer- und -hochrichtung positionsgenau an dem Grundträger gehalten werden.

Bei einem in Anspruch 16 angegebenen Ausführungsbeispiel ist es vorteilhaft möglich, an dem Cockpitquerträger einen Kabelbaum sicher zu halten.

Die Erfindung wird nachfolgend anhand von Ausführungsbeispielen mit Bezug auf die Zeichnung näher erläutert.

Es zeigen
- Fig. 1: in perspektivischer Ansicht einen an einem ausschnittsweise dargestellten Fahrzeugaufbau befestigten Cockpitquerträger nach einem ersten Ausführungsbeispiel,
- Fig. 2: den Cockpitquerträger nach Fig. 1 in Vorderansicht,
- Fig. 3-7: entlang der Schnittlinien in Fig. 2 jeweils einen Querschnitt des Cockpitquerträgers und
- Fig. 8: ein zweites Ausführungsbeispiel eines Cockpitquerträgers in Schnittdarstellung.

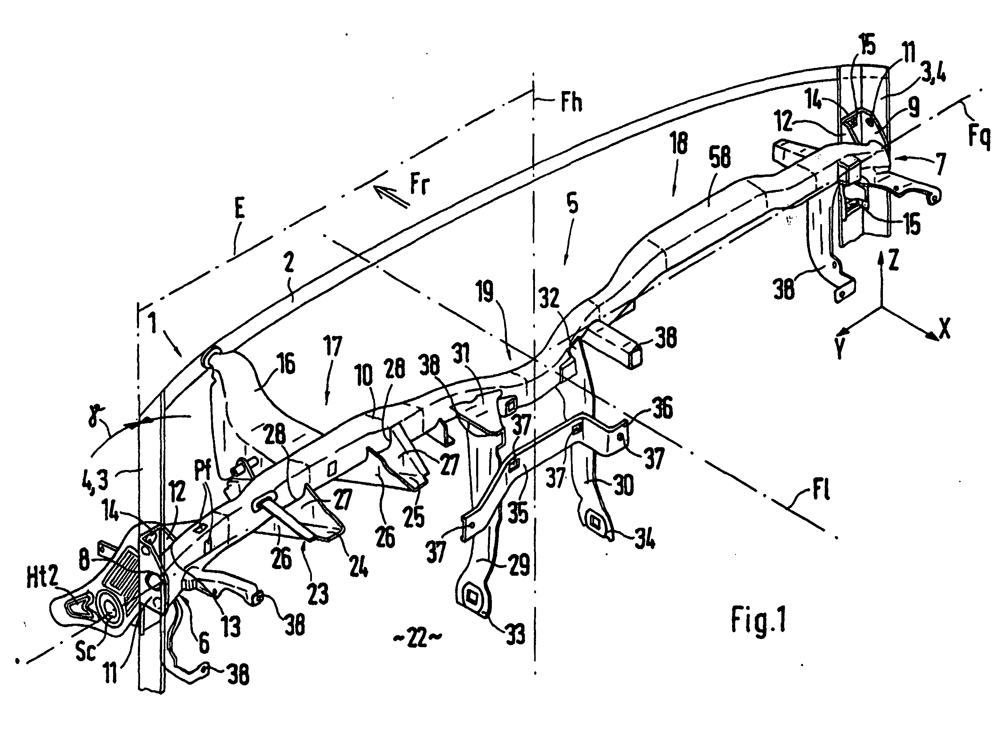

In Fig. 1 ist von einem teilweise dargestellten Aufbau 1 eines Fahrzeugs, insbesondere Personenwagen, ein an einer Frontscheibenunterkante verlaufender Frontscheibenwindlauf 2 und seitliche mit Abstand zueinander liegende Aufbauteile 3 sichtbar. Jedes Aufbauteil 3 umfasst vorzugsweise eine Säule 4 oder wird durch diese gebildet. Die A-Säulen weisen in Richtung der Fahrzeugquerachse Fq einen Abstand zueinander auf und verlaufen im Wesentlichen parallel zu der Fahrzeughochachse Fh. Der Querschnitt der A-Säulen 4 kann L-förmig sein, wobei einer der Schenkel des L parallel oder etwa parallel zur Fahrzeugquerachse Fq ausgerichtet ist.

Im Vorbau des Fahrzeuginneren zwischen den seitlichen Aufbauteilen 3 erstreckt sich parallel oder etwa parallel zur Fahrzeugquerachse Fq ein Querträger für eine Armaturentafel des Fahrzeugs. Dieser Querträger wird im folgenden als Cockpitquerträger 5 bezeichnet. Er ist an den sich gegenüberliegenden Aufbauteilen 3 mit seinen Enden 6 und 7 befestigt. Für diese Befestigung ist an jedem Ende 6 und 7 des Cockpitquerträgers 5 jeweils eine Befestigungskonsole 8 bzw. 9 angeordnet, die mit einem rohrförmigen Grundträger 10 des Cockpitquerträgers 5 Verbunden, vorzugsweise verschweißt, sind. Der Grundträger 10 ist als Hohlprofil mit einem im Wesentlichen kreisförmigen und/oder ovalen Querschnitt realisiert. Die Befestigungskonsolen 8 und 9 weisen einen U-förmigen Querschnitt auf, wobei die Schenkel 11 und 12 des U eine randoffenen Ausnehmung 13 besitzen, in denen der Grundträger 10 zu liegen kommt. Die benachbart zu den Aufbauteilen 3 liegenden Schenkel 11 der Befestigungskonsolen 8 und 9 sowie die Basis 14 des U sind an den seitlichen Aufbauteilen 3 derart festlegbar, dass der Cockpitquerträger 5 in Y- und Z- Richtung bezüglich des Aufbaus 1 ausricht- bzw. justierbar ist. Für diese Justierbarkeit des Cockpitquerträgers 5 in Y- und Z-Richtung sind an den Befestigungskonsolen 8 und 9 und/oder A-Säulen 4 Langlöcher 15 und/oder an den A-Säulen 4 und/oder Befestigungskonsolen 8 und 9 hier nicht dargestellte Bolzen bzw. Zapfen angeordnet, die die Langlöcher 15 durchgreifen. In X-Richtung ist die Position des Cockpitquerträgers 5 derart festgelegt, dass jede Basis 14 der Befestigungskonsolen 8 und 9 am parallel zur Fahrzeugquerachse Fq liegenden Schenkel des L der A-Säulen 4 anliegt. Somit ist die Ausrichtung des Cockpitquerträgers 5 entlang der Fahrzeugquerachse Fq (Y-Richtung) und in Richtung der Fahrzeughochachse Fh (Z-Richtung) möglich sowie seine Position in Fahrtrichtung Fr (X-Richtung bzw. Fahrzeuglängsachse FI) festgelegt.

Zwischen der ersten und zweiten Befestigungskonsole 8 und 9 ist an dem Grundträger 10 eine dritte Befestigungskonsole 16 angeordnet, über die der Grundträger 10 an dem Windlauf 2 befestigt werden kann. Der Grundträger 10 weist außenliegend etwa parallel zur Fahrzeugquerachse Fq verlaufende, vorzugsweise gerade, Seitenabschnitte 17 und 18 auf, die über einen entgegen der Fahrtrichtung Fr gewölbten Mittenabschnitt 19 verbunden sein können. Die Wölbung des Mittenabschnitts kann in einer anderen Richtung ausgeführt sein. Außerdem wäre es denkbar, den Mittenabschnitt gerade auszugestalten.

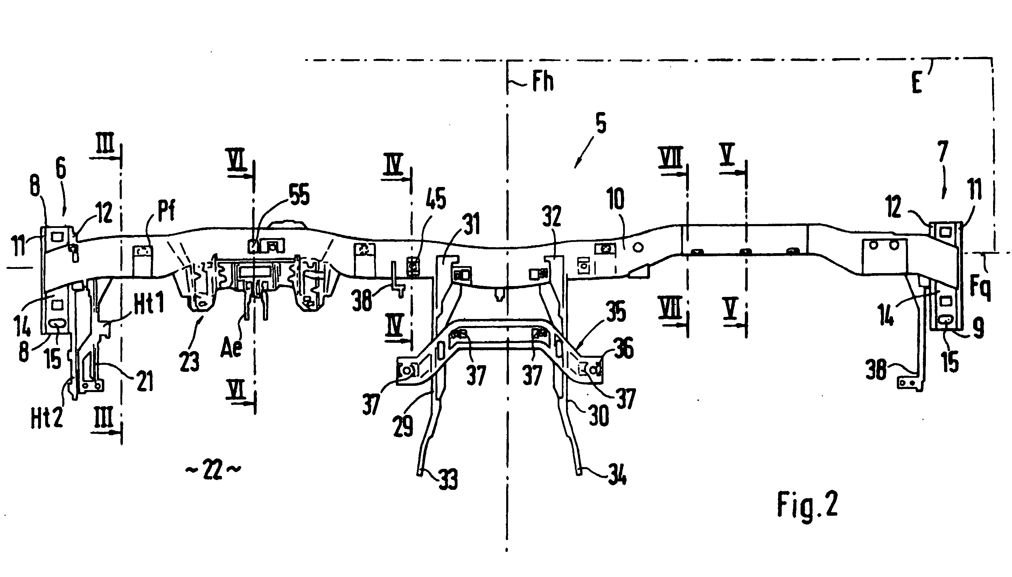

Anhand der Fig. 1 und 2 werden im folgenden an dem Grundträger 10 befestigte Halter für Anbauteile des Cockpits bzw. der Armaturentafel beschrieben. Derartige Anbauteile können Verkleidungsteile, Funktionsmodule, Bedienelemente, Sicherheitseinrichtungen, Anzeigemodule usw. sein. Entlang der Fahrzeugquerachse Fq und in Figuren 1 und 2 von links nach rechts gesehen, liegt neben der ersten Befestigungskonsole 8 ein zweiteiliger Halter 20, der an einem ersten Halterteil Ht1 eine Schwenkachsenaufnahme 21 für ein hier nicht dargestelltes Pedal einer fußbetätigbaren Feststellbremse besitzt. An einem zweiten Halterteil Ht2 ist eine Schweißmutter Sc angebracht, die der Befestigung einer in die Schwenkachsenaufnahme einbringbaren Schwenkachse für das Pedal dient. Der Halter 20 erstreckt sich mit seinen beiden beabstandet zueinander liegenden schwertartigen Halterteilen Ht1 und Ht2 etwa parallel zur Fahrzeughochachse Fh vom Grundträger 10 nach unten in einen hier nicht näher dargestellten Fußraum 22 des Fahrzeugs. Rechts neben dem Halter 20 liegt ein weiterer Halter 23, der zwei mit Abstand zueinander liegende Halterteilelemente 24 und 25 und ein Abstützelement Ae aufweist. An den Teilelementen 24 und 25 ist eine hier nicht sichtbare ein Anbauteil bildende Lenksäule befestigbar, die sich außerdem an dem zwischen den Halterteilelementen angeordneten Abstützelement Ae abstützen kann. Die Teilelemente 24 und 25 besitzen einen im Wesentlichen U-förmigen Querschnitt, wobei in den Schenkeln 26 und 27 des U randoffene Ausnehmungen 28 ausgebildet sind, in denen der Querschnitt des Grundträgers zumindest teilweise aufgenommen ist. Der Halter 23 mit seinen Halterteilelementen 24 und 25 und seinem Abstützelement Ae sowie die dritte Befestigungskonsole 16 sind vorzugsweise einstückig und vorzugsweise als Biege/Stanzteil hergestellt, wobei der Querschnitt der dritten Befestigungskonsole 16 und der des Abstützelements Ae U-förmig sein kann.

Etwa mittig am Mittenabschnitt 19 des Grundträgers 10 sind - in Fahrzeugquerrichtung Fq gesehen - beabstandet zueinander zwei Tunnelstreben 29 und 30 mit ihrem einen Ende 31 bzw. 32 befestigt und mit ihrem anderen Ende 33 bzw. 34 an einem hier nicht wiedergegebenen Tunnel befestigbar, der an einer hier ebenfalls nicht sichtbaren Bodengruppe des Fahrzeugs ausgebildet sein kann. Die Tunnelstreben 29 und 30 erstrecken sich somit vom Grundträger ausgehend etwa parallel zur Fahrzeughochachse Fh nach unten. An den Tunnelstreben 29 und 30 liegt ein Befestigungsteil 35 für ein Klima-/ Heizgerät vor, das ein Anbauteil des Cockpits bildet. Das Befestigungsteil 35 ist rein beispielhaft als Querstrebe 36 realisiert, die die beiden Tunnelstreben 29 und 30 überbrückt bzw. sich zwischen den beiden Tunnelstreben 29 und 30 erstreckt. An der Querstrebe 36 und/oder den Tunnelstreben können für die Festlegung des Klima/Heizgerätes Aufnahmen 37 für Befestigungselemente vorgesehen sein.

Selbstverständlich können weitere Halter 38 an dem Grundträger 10 befestigt sein, die für verschiedenartigste Anbau- bzw. Verkleidungsteile oder Funktionsmodule usw. des nicht weiter ersichtlichen Cockpits vorgesehen sein können.

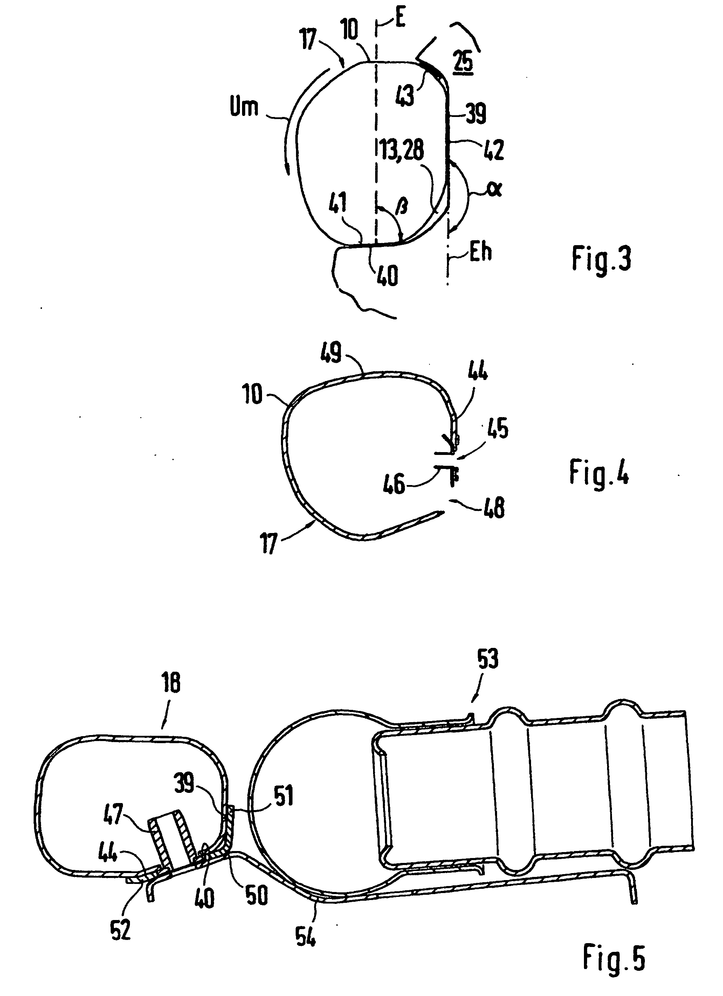

Gemäß Fig. 3 sind für die Positionierung bzw. Ausrichtung jedes Halters 20, 23, 38 am Grundträger 10 ebene bzw. plane erste und zweite Ausrichtflächen 39 und 40 ausgebildet, an denen am Halter 20, 23, 38 ausgebildete ebene erste und zweite Anschlagflächen 41 und 42 anliegen. Die Ausrichtflächen 39, 40 sind - in Umfangsrichtung Um des Grundträgers 10 - in einem Abstand zueinander angeordnet. Für die Befestigung der Halter 20, 23, 38 an dem Grundträger 10 wird zumindest eine Schweißnaht 43 ausgeführt, die im Bereich der Ausrichtflächen 39 bzw. 40 und den zugeordneten Anschlagflächen 41 bzw. 42 vorliegen kann.

Gemäß Fig. 4 ist an dem Grundträger 10 zumindest eine ebene dritte Ausrichtfläche 44 ausgebildet, in die zumindest ein Aufnahmedurchbruch 45 eingebracht ist, in den eine Schnappmutter 46 oder Nietmutter 47 (Fig. 5) eingesetzt ist. Die Schnapp- oder Nietmutter ist für die Befestigung eines Anbauteils des Cockpits oder eines weiteren Halters vorgesehen. Sofern eine Schnappmutter 46 in den Aufnahmedurchbruch 45 eingesetzt werden soll, ist vorzugsweise benachbart zu dem Aufnahmedurchbruch 45 eine Einschuböffnung 48 im Grundträger 10 vorgesehen, über die die Schnappmutter 46 auf die Umfangswandung 49 des Grundträgers geschoben werden kann. Für die Schnapp- und Nietmuttern 46 und 47 ergibt sich durch die dritte Ausrichtfläche 44 eine satte Anlagefläche, so dass eine genaue Ausrichtung der Muttern 46 und 47 bezüglich der Ebene E möglich ist .

Gemäß Fig. 1 sind die Befestigungskonsolen 8 und 9 am Grundträger 10 ausgerichtet derart, dass sie in einem vorgegebenen ersten Winkel γ zu einer von der Fahrzeugquer- und Fahrzeughochachse aufgespannten Ebene E verlaufen. Dieser Winkel γ ist an die Neigung der Säulen um die Fahrzeugquerachse Fq angepaßt und beträgt im Ausführungsbeispiel etwa 0°. Die Ausrichtflächen 39 und 40 (Fig. 3) schließen jeweils einen vorgebbaren zweiten Winkel α und β mit dieser Ebene E bzw. einer parallel dazu verlaufenden Hilfsebene Eh ein. Die zweiten Winkel α und β können zwischen 0 und 180° betragen, wobei vorzugsweise α ungleich β ist und demnach beide Ausrichtflächen in Umfangsrichtung Um einen Abstand zueinander aufweisen. Beim Anlegen der Halter an den Grundträger ermöglichen die ersten und zweiten Ausrichtflächen sowie die Anschlagflächen eine winkelgenaue Positionierung der Halter 20, 23, 38 um die Fahrzeugquerachse Fq sowie eine genaue Höhenausrichtung in Z-Richtung. Am Grundträger 10 können für die Ausrichtung der Befestigungskonsolen 8 und 9 ebenfalls derartige Ausrichtflächen 39 und 40 ausgebildet werden; vorzugsweise sind dann an den Rändern der Ausnehmungen 13 an den Befestigungskonsolen entsprechende ebene Anschlagflächen hergestellt.

Gemäß Fig. 5 ist ein Halter 50 für ein Airbagmodul 53 vorgesehen, das ein Anbauteil des Cockpits darstellt. Der Halter 50 besitzt zwei Halterschenkel 51 und 52, die einen Winkel ≥ 90° miteinander einschließen. Jeder Halterschenkel 51 und 52 liegt mit seiner Anschlagfläche 41 bzw. 42 an der ersten bzw. zweiten Ausrichtfläche 39, 40 an. Für die Befestigung des Halters 50 kann die Nietmutter 47 vorgesehen sein, in die ein Befestigungselement (nicht dargestellt) eingeschraubt werden kann, um den Halter 50 am Grundträger 10 zu befestigen. Denkbar wäre es allerdings auch, den Halter 50 am Grundträger zu verschweißen. Für die Anbindung des Airbagmoduls 53 an den Halter 50, insbesondere an einem der Halterschenkel 51 bzw. 52, ist eine Befestigungslasche 54 ausgebildet.

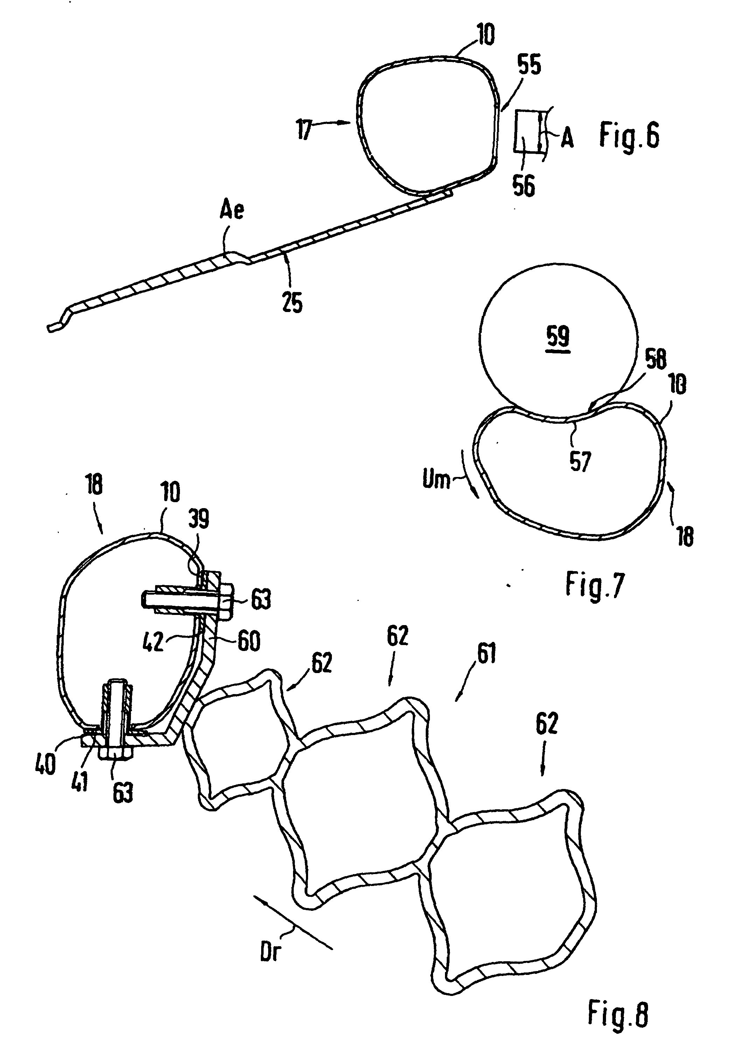

Entsprechend Fig. 6 ist an dem Grundträger 10 wenigstens ein Positionierdurchbruch 55 ausgebildet, der einen Positionierstift 56 aufnimmt, der an einem hier nicht dargestellten Instrumentenmodul bzw. Anzeigemodul angeordnet ist. Der Außendurchmesser A des Positionierstiftes 56 ist vorzugsweise so bemessen, dass er mit geringem Spiel in dem Positionierdurchbruch 55 zu liegen kommt, um eine Ausrichtung in Z- und Y- Richtung des Instrumentenmoduls zu gewährleisten. Für die Ausrichtung des Instrumentenmoduls um die Fahrzeugquerachse Fq kann an dem Grundträger 10 zumindest eine ebene Positionierfläche Pf (Fig. 1) vorliegen, an der das Modul auf- bzw. anliegt. Der Positionierdurchbruch 55 kann in der Positionierfläche liegen.

Fig. 7 verdeutlicht, dass der Querschnitt des Grundträgers 10 eine von innen nach außen gerichtete Wölbung 57 besitzt, die eine schalenartige Aufnahme 58 bildet, in der beispielsweise ein elektrische Leitungen umfassender Kabelbaum 59 verlegt sein kann. Mit hier nicht dargestellten sowohl den Grundträger 10 in Umfangsrichtung als auch den Kabelbaum 59 umgreifenden Befestigungsmitteln, beispielsweise Kabelbinder oder dgl., kann der Kabelbaum 59 am Grundträger befestigt werden. Die in Fig. 7 dargestellte Wölbung 57 erstreckt sich - in Richtung der Fahrzeugquerachse Fq gesehen - zumindest bereichsweise über die Länge des Grundträgers 10. Insbesondere im Bereich des im Wesentlichen geraden Seitenabschnitts 18 des Grundträgers ist diese Wölbung 57 bzw. Aufnahme 58 ausgebildet.

An einem Grundträger 10 nach einem zweiten Ausführungsbeispiel ist neben den in den Fig. 1 und 2 dargestellten Haltern noch ein weitere Halter 60 (Fig. 8) befestigbar, an dem ein Deformationselement 61 angeordnet ist, das insbesondere als Knieaufprallschutz für Fahrzeuginsassen realisiert ist. Das Deformationselement 61 besitzt zumindest eine elastisch und/oder plastisch verformbare Struktur 62, wobei im gezeigten Ausführungsbeispiel mehrere dieser Strukturen 62 in Deformationsrichtung Dr hintereinander angeordnet sind. Die Strukturen 62 können beispielsweise durch wabenförmige Elemente gebildet sein. Ein oder mehrere Deformationselemente 61 können an zumindest einem der Seitenabschnitte 17 bzw. 18 befestigt werden und sich in den Fußraum 22 erstrecken. Das bzw. die Deformationselemente können mit einer Blende verkleidet sein.

Der Halter 60 ist hier rein beispielhaft mittels Nietmuttern 47 am Grundträger 10 befestigt. Selbstverständlich kann der Halter 60 auch mit dem Grundträger 10 verschweißt werden, wie es in Fig. 3 gezeigt ist. Bevorzugt wird jedoch das in Fig. 8 dargestellte Ausführungsbeispiel mit den Nietmuttern 47, in die Befestigungselemente 63, insbesondere Schrauben, einsetzbar sind, so dass das Deformationselement 61 austauschbar ist.

Sämtliche Ausrichtflächen 39, 40, 44, die Wölbung 57, die unterschiedlichen Querschnittsformen (Fig. 3 bis 8) des Grundträgers 10, der Formverlauf der Seitenabschnitte 17 und 18 sowie des gebogenen Mittenabschnitts 19 und die Positionierfläche Pf können durch auch als hydraulisches Aufweiten bezeichnete Innenhochdruckumformung des Grundträgers 10 hergestellt werden, der hierfür in eine entsprechende Form eingelegt wird, die zumindest eine Ausnehmung mit einem ebenen oder gewölbten Boden aufweist, in die das Grundträgermaterial fließt und an dem Boden anliegt. Die Durchbrüche 45, 55 und/oder die Öffnung 48 können beim hydraulischen Aufweiten aus dem Grundträger herausgearbeitet werden.

## Patentansprüche

1. Querträger (5) für eine Armaturentafel eines Fahrzeugs, insbesondere Personenwagen, der im Vorbau des Fahrzeugs in Fahrzeugquerrichtung ausgerichtet mit jeweils einem Ende (6, 7) an sich gegenüberliegenden Aufbauteilen (3) befestigbar ist, mit einem rohrförmigen Grundträger (10), mehreren mit Abstand zueinander am Grundträger (10) angebrachten Befesfigungskonsolen (8, 9) für die fahrzeugaufbauseitige Anbindung des Querträgers (5) und mit zumindest einem Halter (20, 23, 38, 60) für ein Anbauteil der Armaturentafel, wobei wenigstens zwei ebene Ausrichtflächen (39, 40) an dem im Querschnitt kreis- oder ovalförmigen Grundträger (10) ausgebildet sind und der Halter (20, 23, 38, 60) zumindest zwei ebene Anschlagflächen (41, 42) aufweist, die an den Ausrichtflächen (39, 40) anliegen, wobei an dem Grundträger (10) die mindestens ersten und zweiten ebenen Ausrichtflächen (39, 40) für den Halter (20, 23, 38, 60) vorgesehen sind, wobei die beiden Ausrichtflächen (39, 40) - in Umfangsrichtung (Um) des Grundträgers (10) gesehen - einen Abstand zueinander aufweisen und wobei der Halter (20, 23, 38, 50, 60) an dem Grundträger (10) festgeschweißt ist, **dadurch gekennzeichnet, dass** die Ausrichtflächen (39, 40) unter vorgebbaren, unterschiedlichen Winkeln (α, β) zu einer von der Fahrzeugquerachse (Fg) und der Fahrzeughochachse (Fh) aufgespannten Ebene (E) bzw. einer dazu parallel liegenden Hilfsebene (Eh) verlaufen und durch Innenhochdruckumformung an dem im Querschnitt kreis - oder ovalförmigen Grundträger (10) ausgebildet sind.

2. Querträger nach Anspruch 1, **dadurch gekennzeichnet, dass** zumindest eine ebene dritte Ausrichtfläche (44) am Grundträger ausgebildet ist, in die wenigstens ein Aufnahmedurchbruch (45) eingebracht ist, in den eine Schnapp- oder Nietmutter (46, 47) eingesetzt ist, die für die Befestigung eines weiteren Anbauteils der Armaturentafel vorgesehen ist.

3. Querträger nach Anspruch 1, **dadurch gekennzeichnet, dass** der Halter (20, 23, 38, 50, 60) zumindest an einer der Ausrichtflächen (39, 40) am Grundträger (10) festgeschweißt ist.

4. Querträger nach Anspruch 1, **dadurch gekennzeichnet, dass** die Befestigungskonsolen (8, 9) mit dem Grundträger (10) verschweißt sind, dass die Befestigungskonsolen in einem vorgebaren ersten Winkel (γ) zu einer von der Fahrzeugquer- und Fahrzeughochachse (Fq, Fh) aufgespannten Ebene (E, Eh) verlaufen und dass die ersten und zweiten Ausrichtflächen (39, 40) jeweils einen vorgehbaren zweiten Winkel (α, β) mit dieser Ebene (E, Eh) einschließen.

5. Querträger nach Anspruch 4, **dadurch gekennzeichnet, dass** in der Ebene der ersten, zweiten und/oder dritten Ausrichtfläche (39, 40, 44) die Fahrzeugquerachse (Fq) liegt oder parallel und mit Abstand dazu verläuft.

6. Querträger nach Anspruch 1, **dadurch gekennzeichnet, dass** der Halter (50) für ein Airbagmodul (53) vorgesehen ist, welches das Anbauteil der Armaturentafel bildet.

7. Querträger nach Anspruch 1, **dadurch gekennzeichnet, dass** der Halter (23) für eine das Anbauteil bildende Lenksäule des Fahrzeugs vorgesehen ist.

8. Querträger nach Anspruch 1, **dadurch gekennzeichnet, dass** - in Fahrzeugquerrichtung (Fq) gesehen - etwa mittig am Grundträger (10) zwei mit Abstand zueinander liegende Halter bildende Tunnelstreben (29, 30) angebracht sind, die mit einem an einer Bodengruppe des Fahrzeugs vorliegenden Tunnel verbindbar sind, wobei an dem Grundträger (10) für jede Tunnelstrebe (29, 30) zumindest eine ebene Ausrichtfläche (39, 40) vorgesehen ist.

9. Querträger nach Anspruch 8, **dadurch gekennzeichnet, dass** an zumindest einer der Tunnelstreben (29, 30) Befestigungsmittel (35) für ein Klima- / Heizgerät ausgebildet sind.

10. Querträger nach Anspruch 9, **dadurch gekennzeichnet, dass** das Befestigungsmittel (35) durch eine die zwei Tunnelstreben (29, 30) verbindende Querstrebe (36) gebildet ist

11. Querträger nach Anspruch 1, **dadurch gekennzeichnet, dass** an dem Grundträger (10) eine dritte Befestigungskonsole (16) befestigt ist, die der Anbindung des Grundträgers (10) an einem Frontscheibenwindlauf (2) des Fahrzeugs dient.

12. Querträger nach Anspruch 7 oder 11, **dadurch gekennzeichnet, dass** die dritte Befestigungskonsole (16) und der Halter (23) für die Lenksäule einstückig ausgebildet sind.

13. Querträger nach Anspruch 1, **dadurch gekennzeichnet, dass** der Halter (20) eine Schwenkachsenaufnahme (21) für ein Pedal einer fußbetätigbaren Feststellbremse besitzt, wobei sich dieser Halter (20) vom Grundträger nach unten in den Fußraum (22) des Fahrzeugs erstreckt.

14. Querträger nach Anspruch 1, **dadurch gekennzeichnet, dass** an dem Grundträger (10) durch Innenhochdruckumformung eine oder mehrere ebene Positionierflächen (Pf) für die Ausrichtung eines Instrumentenmoduls des Fahrzeugs ausgebildet ist.

15. Querträger nach Anspruch 1 oder 14, **dadurch gekennzeichnet, dass** an dem Grundträger (10), vorzugsweise in der Positionierfläche (Pf), mindestens ein Positionierdurchbruch (55) für die Aufnahme eines an dem Instrumentenmodul liegenden Positionierstifts (56) ausgebildet ist.

16. Querträger nach Anspruch 1, **dadurch gekennzeichnet, dass** der Querschnitt des Grundträgers (10) - in Fahrzeugquerrichtung (Fq) gesehen - zumindest bereichsweise eine von innen nach außen gerichtete Wölbung (57) besitzt, die eine schalenartige Aufnahme (58) für einen Kabelbaum (59) des Fahrzeugs bildet.

17. Querträger nach Anspruch 2, **gekennzeichnet durch** einen weiteren Halter (20, 23, 38, 50, 60) für das weitere Anbauteil der Armaturentafel, wobei dieser Halter mit dem Grundträger (10) verschraubt ist.

18. Querträger nach Anspruch 2, **dadurch gekennzeichnet, dass** das weitere Anbauteil direkt mit dem Grundträger (10) verschraubt ist.

## Claims

1. A cross member (5) for a dashboard of a vehicle, in particular a passenger car, which is orientated in the forward structure of the vehicle in the transverse direction of the vehicle and can be fastened with one respective end (6, 7) on mutually opposed parts (3) of the body in each case, with a tubular main support (10), a plurality of fastening brackets (8, 9) attached to the main support (10) at a distance from one another for the attachment of the cross member (5) to the vehicle body and with at least one holding means (20, 23, 38, 60) for an add-on part of the dashboard, wherein at least two flat orientation faces (39, 40) are formed on the main support (10) which is circular or oval in cross-section, and the holding means (20, 23, 38, 60) has at least two flat stop faces (41, 42) which abut the orientation faces (39, 40), wherein the at least first and second flat orientation faces (39, 40) for the holding means (20, 23, 38, 60) are provided on the main support (10), wherein the two orientation faces (39, 40) - as viewed in the peripheral direction (**Um**) of the main support (10) - are at a distance from each other and wherein the holding means (20, 23, 38, 50, 60) is welded firmly to the main support (10), **characterized in that** the orientation faces (39, 40) extend at pre-determinable, different angles (α, β) with respect to a plane (**E**) extending through the transverse axis (**Fg**) [*sic - recte* (**Fq**)] of the vehicle and the vertical axis (**Fh**) of the vehicle or an auxiliary plane (**Eh**) situated parallel to the plane (**E**) and are produced by internal high-pressure shaping on the main support (10) which is circular or oval in cross-section.

2. A cross member according to Claim 1, **characterized in that** the main support has at least one flat third orientation face (44) formed on it, in which face at least one receiving opening (45) is formed, into which is inserted a snap-on or rivet nut (46, 47) which is provided for fastening a further add-on part of the dashboard.

3. A cross member according to Claim 1, **characterized in that** the holding means (20, 23, 38, 50, 60) is welded firmly to the main support (10) at least on one of the orientation faces (39, 40).

4. A cross member according to Claim 1, **characterized in that** the fastening brackets (8, 9) are welded to the main support (10), the fastening brackets extend at a pre-determinable first angle (γ) to a plane **(E, Eh)** extending through the transverse and the vertical axis **(Fq, Fh)** of the vehicle, and the first and second orientation faces (39, 40) each form a pre-determinable second angle (α, β) with the said plane (**E, Eh**).

5. A cross member according to Claim 4, **characterized in that** the transverse axis (**Fq**) of the vehicle is situated in the plane of the first, second and/or third orientation face (39, 40, 44) or extends parallel to it and at a distance from it.

6. A cross member according to Claim 1, **characterized in that** the holding means (50) is provided for an airbag module (53) which forms the add-on part of the dashboard.

7. A cross member according to Claim 1, **characterized in that** the holding means (23) is provided for a steering column of the vehicle forming the add-on part.

8. A cross member according to Claim 1, **characterized in that** two tunnel braces (29, 30), which form holding means situated at a distance from each other and which can be connected to a tunnel provided on a floor group of the vehicle, are attached substantially centrally - as viewed in the transverse direction (**Fq**) of the vehicle - on the main support (10), wherein at least one flat orientation face (39, 40) is provided on the main support (10) for each tunnel brace (29, 30).

9. A cross member according to Claim 8, **characterized in that** fastening means (35) for an air-conditioning / heating appliance are formed on at least one of the tunnel braces (29, 30).

10. A cross member according to Claim 9, **characterized in that** the fastening means (35) is formed by a transverse brace (36) connecting the two tunnel braces (29, 30).

11. A cross member according to Claim 1, **characterized in that** a third fastening bracket (16), which is used for the attachment of the main support (10) to a windscreen cowl (2) of the vehicle, is fastened to the main support (10).

12. A cross member according to Claim 7 or 11, **characterized in that** the third fastening bracket (16) and the holding means (23) for the steering column are constructed in one piece.

13. A cross member according to Claim 1, **characterized in that** the holding means (20) has a swivel-pin-receiving means (21) for a pedal of a foot-actuable parking brake, wherein the said holding means (20) extends downwards from the main support into the leg room (22) of the vehicle.

14. A cross member according to Claim 1, **characterized in that** one or more flat positioning faces (**Pf**) for the orientation of an instrument module of the vehicle is or are formed on the main support (10) by internal high-pressure shaping.

15. A cross member according to Claim 1 or 14, **characterized in that** at least one positioning opening (55) for receiving a positioning pin (56) arranged on the instrument module is formed on the main support (10), preferably in the positioning face (**Pf**).

16. A cross member according to Claim 1, **characterized in that** the cross-section of the main support (10) has at least locally ― as viewed in the transverse direction (**Fq**) of the vehicle ― a bulging portion (57) which is orientated outwards from the inside and which forms a shell-like receiving means (58) for a cable tree (59) of the vehicle.

17. A cross member according to Claim 2, **characterized by** a further holding means (20, 23, 38, 50, 60) for the further add-on part of the dashboard, wherein the said holding means is bolted to the main support (10).

18. A cross member according to Claim 2, **characterized in that** the further add-on part is bolted directly to the main support (10).

## Revendications

1. Traverse de support (5) pour un tableau de bord d'un véhicule automobile, en particulier une voiture de tourisme, qui peut être fixée dans la partie avant du véhicule orientée dans le sens transversal du véhicule avec respectivement une extrémité (6, 7) sur des parties de carrosserie (3) se faisant face, comprenant un support de base (10) de forme tubulaire, plusieurs consoles de fixation (8, 9) placées à distance les unes des autres sur le support de base (10) pour le rattachement côté carrosserie du véhicule de la traverse (5) et au moins un support (20, 23, 38, 60) pour une partie rapportée du tableau de bord, au moins deux surfaces d'alignement (39, 40) planes étant conçues sur le support de base (10) de forme circulaire ou ovale en section et les supports (20, 23, 38, 60) présentant au moins deux surfaces d'appui (41, 42) planes, qui s'appuient sur les surfaces d'alignement (39, 40), les au moins première et seconde surfaces d'alignement (39, 40) planes pour le support (20, 23, 38, 60) étant prévues sur le support de base (10), les deux surfaces d'alignement (39, 40) présentant un espacement l'une par rapport à l'autre, vues dans le sens périphérique (Um) du support de base (10), et le support (20, 23, 38, 50, 60) étant soudés sur le support de base (10), **caractérisée en ce que** les surfaces d'alignement (39, 40) sont agencées dans des angles (α, β) prédéfinissables et différents par rapport à un plan (E) tendu par l'axe transversal du véhicule (Fg) et l'axe vertical du véhicule (Fh) et à un plan auxiliaire (Eh) agencé parallèlement au premier et sont réalisées par formage avec pression intérieure élevée sur le support de base (10) de forme circulaire ou ovale en section.

2. Traverse de support selon la revendication 1, **caractérisée en ce qu'**au moins une troisième surface d'alignement (44) plane soit réalisée sur le support de base, dans laquelle est introduit au moins un percement de logement 45, dans lequel est inséré un écrou à encliquetage ou à river (46, 47), qui est prévu pour la fixation d'une autre partie rapportée du tableau de bord.

3. Traverse de support selon la revendication 1, **caractérisée en ce que** le support (20, 23, 38, 50, 60) est soudé de façon fixe au moins sur l'une des surfaces d'alignement (39, 40) sur le support de base (10).

4. Traverse de support selon la revendication 1, **caractérisée en ce que** les consoles de fixation (8, 9) sont soudées avec le support de base (10), **en ce que** les consoles de fixation sont agencées dans un premier angle (γ) prédéfinissable par rapport à un plan (E, Eh) tendu par l'axe transversal et l'axe vertical du véhicule (Fq, Fh) et **en ce que** la première et la seconde surfaces d'alignement (39, 40) forment respectivement un second angle (α, β) prédéfinissable avec ce plan (E, Eh).

5. Traverse de support selon la revendication 4, **caractérisée en ce que** l'axe transversal du véhicule (Fq) est situé dans le plan de la première, deuxième et/ou de la troisième surfaces d'alignement (39, 40, 44) ou est parallèle à celle-ci ou est situé à distance de celle-ci.

6. Traverse de support selon la revendication 1, **caractérisée en ce que** le support (50) est prévu pour le module d'airbag (53) qui forme la partie rapportée du tableau de bord.

7. Traverse de support selon la revendication 1, **caractérisée en ce que** le support (23) est prévu pour une colonne de direction, formant la partie rapportée, du véhicule.

8. Traverse de support selon la revendication 1, **caractérisée en ce que**, vu dans le sens transversal du véhicule (Fq), à peu près au centre sur le support de base (10) sont placées deux entretoises de tunnel (29, 30) formant des supports espacés les uns des autres, lesquelles peuvent être reliées à un tunnel présent sur un dessous de caisse du véhicule, au moins une surface d'alignement (39, 40) plane étant prévue sur le support de base (10) pour chaque entretoise de tunnel (29, 30).

9. Traverse de support selon la revendication 8, **caractérisée en ce que** des moyens de fixation (35) pour un appareil de climatisation/chauffage sont réalisés sur au moins l'une des entretoises de tunnel (29, 30).

10. Traverse de support selon la revendication 9, **caractérisée en ce que** le moyen de fixation (35) est formé par une entretoise transversale (36) reliant les deux entretoises de tunnel (29, 30).

11. Traverse de support selon la revendication 1, **caractérisée en ce que** sur le support de base (10) est fixée une troisième console de fixation (16), qui sert au rattachement du support de base (10) à un auvent de pare-brise (2) du véhicule.

12. Traverse de support selon la revendication 7 ou 11, **caractérisée en ce que** la troisième console de fixation (16) et le support (23) pour la colonne de direction sont conçus d'une seule pièce.

13. Traverse de support selon la revendication 1, **caractérisée en ce que** le support (20) présente un logement d'axe de basculement (21) pour une pédale d'un frein de stationnement pouvant être actionné au pied, ce support (20) s'étendant depuis le support de base vers le bas dans l'espace pour les jambes (22) du véhicule.

14. Traverse de support selon la revendication 1, **caractérisée en ce qu'**une ou plusieurs surfaces de positionnement (Pf) planes pour l'orientation d'un module d'instruments du véhicule est réalisée sur le support de base (10) par formage à haute pression intérieure.

15. Traverse de support selon la revendication 1 ou 14, **caractérisée en ce que** sur le support de base (10), de préférence dans la surface de positionnement (Pf), est réalisé au moins un percement de positionnement (55) pour le logement d'une goupille de positionnement (56) disposée sur le module d'instruments.

16. Traverse de support selon la revendication 1, **caractérisée en ce que** la section du support de base (10) présente, vue dans le sens transversal du véhicule (Fq), au moins par endroits une courbure (57) orientée de l'intérieur vers l'extérieur, qui forme un logement (58) en forme de coque pour un faisceau de câbles (59) du véhicule.

17. Traverse de support selon la revendication 2, **caractérisée par** un autre support (20, 23, 38, 50, 60) pour l'autre partie rapportée du tableau de bord, ce support étant vissé avec le support de base (10).

18. Traverse de support selon la revendication 2, **caractérisée en ce que** l'autre partie rapportée est vissée directement avec le support de base (10).
